# EUROPÄISCHE PATENTSCHRIFT

(11) **EP 1 712 065 B1**
(45) Veröffentlichungstag und Bekanntmachung des Hinweises auf die Patenterteilung: **07.11.2007**
(21) Anmeldenummer: 05792202.3
(22) Anmeldetag: 29.08.2005
(51) Int. Cl.: H04L 29/08, H04M 3/42

(54) **VERFAHREN ZUR REALISIERUNG EINES PRESENCE DIENSTES UND PRESENCE SYSTEM& x9;**
METHOD FOR REALIZING A PRESENCE SERVICE AND PRESENCE SYSTEM
PROCEDE PERMETTANT DE REALISER UN SERVICE DE PRESENCE ET SYSTEME DE PRESENCE CORRESPONDANT

(30) Priorität: 30.09.2004 DE 102004047689
(43) Veröffentlichungstag der Anmeldung: 18.10.2006
(73) Patentinhaber: Siemens Enterprise Communications GmbH & Co. KG, 81379 München (DE)
(72) Erfinder: HUTT, Manfred, 81371 München (DE); NIERHAUS, Florian, 80469 München (DE); ZIMMERMANN, Rainer, 33106 Paderborn (DE)
(86) Internationale Anmeldenummer: PCT/EP2005/054228
(87) Internationale Veröffentlichungsnummer: WO 2006/034933

(56) Entgegenhaltungen:
- EP-A- 1 549 013
- WO-A-20/04028178
- WO-A-20/05072494
- US-A1- 2004 170 263
- US-A1- 2004 248 597
- US-A1- 2005 021 854

## Beschreibung

Die vorliegende Erfindung betrifft ein Verfahren zur Reduzierung der Anzahl der für eine Realisierung eines so genannten "Presence Services" zu übermittelnden Änderungsmeldungen und ein entsprechendes Presence System.

Aus der Produktschrift der Firma Siemens "ISDN im Büro - HICOM", Sonderausgabe telcom report und Siemens Magazin COM, 1985, ISBN 3-8009-3849-9, insbesondere der Seiten 26 - 31 und 58 - 66, ist eine Kommunikationsanlage bekannt, die neben vermittlungsbezogenen Funktionen zusätzliche Funktionen zur Verfügung stellt. Solche zusätzlichen Funktionen werden im Allgemeinen als Leistungsmerkmale bezeichnet, wobei ein bekanntes Leistungsmerkmal der so genannte "Presence Service" ist. Durch das Leistungsmerkmal "Presence Service" werden einem Teilnehmer an einem ihm zugeordneten Endgerät - beispielsweise einem Telefon oder einem Personal Computer - Informationen über den aktuellen Status anderer Teilnehmer bzw. deren Endgeräte anzeigt. Diese Informationen sind dabei häufig in Form einer Liste - in der Literatur häufig als Buddy-List bezeichnet - organisiert. Die Teilnehmer der Liste sind dabei in der Regel frei konfigurierbar, beispielsweise können in einer derartigen Liste alle an einem Projekt arbeitenden Personen oder die Mitarbeiter einer Abteilung zusammengefasst werden.

Um einen real-time Presence Service realisieren zu können, ist es notwendig, dass alle Statuswechsel - beispielsweise Abheben oder Auflegen eines Telefonhörers bei einem Telefonendgerät - der überwachten Teilnehmers erkannt und Änderungsmeldungen an die entsprechenden Endgeräte zur Aktualisierung der Listen übermittelt werden. Dies kann unter Umständen zu einer hohen Belastung in den Systemen führen. Geht man beispielsweise von einem System mit 50 Teilnehmern pro Liste, 20.000 zu überwachenden Einrichtungen, 10 Updates pro Stunde und Teilnehmer und einer Übertragungsrate von 1 kByte pro Update aus, so führt dies allein für die Änderungsmeldungen zu einer Systembelastung von 22,76 MBit/s.

Eine Möglichkeit zur Reduzierung der Systembelastung besteht in der Reduzierung der Anzahl der über das Presence System übermittelten Änderungsmeldungen. Eine bekannte Möglichkeit zur Reduzierung der Änderungsmeldungen ist, dass durch das Presence System nicht mehr alle Zustandsänderungen an die Endgeräte übermittelt werden. Dies kann jedoch dazu führen, dass gerade diejenigen Statuswechsel vom Presence System "unterdrückt" werden, die für einen Teilnehmer interessant sind.

Ein Presence System ist zum Beispiel aus WO2004/028178 oder US2004/0170263 bekannt.

Der vorliegenden Erfindung liegt somit die Aufgabe zugrunde, ein alternatives Verfahren und ein entsprechendes Presence System anzugeben, durch welches die Anzahl der über das System zu übermittelnden Änderungsmeldungen reduziert werden kann.

Eine Lösung der Aufgabe erfolgt bezüglich des Verfahrens durch die Merkmale des unabhängigen Patentanspruchs 1 und bezüglich des Presence Systems durch die Merkmale des unabhängigen Patentanspruchs 17.

Die Erfindung basiert auf einem System, bei dem in einem aktivierten Status Teilnehmerinformationen selbst an einer Anzeigeeinrichtung eines Endgerätes angezeigt und in einem deaktivierten Status die Teilnehmerinformationen selbst nicht sichtbar sind. Die Teilnehmerinformationen umfassen dabei Informationen über die Teilnehmer selbst und/oder über die den Teilnehmern zugeordneten Einrichtungen, wobei die Teilnehmerinformationen vorzugsweise in Form einer aus der Literatur bekannten "Buddy-Liste" organisiert sind.

Zur besseren Verständlichkeit der vorliegenden Anmeldung wird im Folgenden anstelle des Begriffs "Teilnehmerinformationen" der Begriff "Buddy-Liste" verwendet, wobei die Verwendung des Begriffs "Buddy-Liste" keine Einschränkung auf die Organisation der Teilnehmerinformationen in Form einer Liste bedeutet.

Erfindungsgemäß wird eine Information, ob sich die Buddy-Liste in einem aktivierten oder in einem deaktivierten Status befindet an eine die Aktualisierung der Buddy-Liste steuernde Steuereinrichtung übermittelt, wobei im deaktivierten Status die Aktualisierung der Buddy-Liste anhand eines anderen Verfahrens erfolgt, als im aktivierten Status.

Gemäß der vorliegenden Erfindung befindet sich die Buddy-Liste in einem deaktivierten Status wenn einer der folgenden Fälle vorliegt:
a) die Buddy-Liste ist verdeckt, beispielsweise befindet sich auf der Anzeigeeinrichtung eine andere Applikation im Vordergrund;
b) die Buddy-Liste befindet sich außerhalb des sichtbaren Bereichs der Anzeigeeinrichtung;
c) die Buddy-Liste ist lediglich als ein die Buddy-Liste repräsentierendes Symbol dargestellt (die Buddy-Liste ist "ikonisiert");
d) ein Teil der Buddy-Liste ist als ein die Buddy-Liste repräsentierendes Symbol dargestellt.

Ein wesentlicher Vorteil der Erfindung besteht darin, dass das erfindungsgemäße Verfahren auf einfache Weise in bereits bestehende Systeme implementiert werden kann.

Vorteilhafte Weiterbildungen der Erfindung sind in den Unteransprüchen angegeben.

Gemäß einer Ausgestaltung der vorliegenden Erfindung erfolgt im deaktivierten Status eine Aktualisierung der Teilnehmerinformationen nicht unmittelbar nach einer Zustandsänderung des mindestens einen zu überwachenden Teilnehmers bzw. der im zugeordneten Einrichtung, sondern nach vorgegebenen Zeitabständen.

Durch eine derartige Reduzierung der im System zu übermittelnden Änderungsmeldungen, besteht mit dem gleichen Presence System die Möglichkeit eine größere Anzahl von Teilnehmern bzw. Einrichtungen zu überwachen und/oder mehr Buddy-Listen zu verwalten.

Gemäß einer weiteren Ausgestaltung der vorliegenden Erfindung können die Zeitanstände nach denen eine Aktualisierung der Buddy-Liste erfolgt durch einen Benutzer individuell eingestellt werden. Auf diese Weise kann die Aktualisierung der Buddy-Liste an die individuellen Bedingungen eines Teilnehmers angepasst werden. Alternativ können die Zeitabstände steuereinrichtungs-individuell eingestellt werden, so dass alle von der Steuereinrichtung gesteuerten Buddy-Listen gleichzeitig aktualisiert werden.

Gemäß einer weiteren Ausgestaltung der vorliegenden Erfindung wird die Buddy-Liste im deaktivierten Status nur bei Änderungen von nicht-echtzeitkritischen Zuständen eines zu überwachenden Teilnehmers aktualisiert. Auf diese Weise kann die Anzahl der übermittelten Änderungsmeldungen weiter reduziert werden. Da sich echtzeitkrititsche Zustände während des deaktivierten Status in der Regel mehrfach ändern ist eine permanente Aktualisierung dieser echtzeitkrititschen Zustände nicht notwendig.

Gemäß einer weiteren Ausgestaltung erfolgt die Übermittlung der Information, ob sich die Buddy-Liste in einem aktivierten oder in einem deaktivierten Status befindet, implizit dadurch, dass durch das Endgerät die Verbindung zwischen der Steuereinrichtung und dem Endgerät unterbrochen wird, oder alternativ durch eine explizite Meldung. Bei einer expliziten Meldung kann dahingehend unterschieden werden, ob die Buddy-Liste - beispielsweise bei einer Verdeckung - weiter an der Aktualisierungsinformation interessiert ist, oder ob die Buddy-Liste - beispielsweise bei einer Ikonisierung - nicht mehr an der Aktualisierungsinformation interessiert ist.

Ein Ausführungsbeispiel der Erfindung wird im Folgenden anhand der Zeichnung näher erläutert.

Dabei zeigt:
- Fig. 1:: ein Strukturbild zur schematischen Darstellung der am erfindungsgemäßen Verfahren beteiligten wesentlichen Funktionseinheiten;
- Fig. 2:: ein Ablaufdiagramm zur Veranschaulichung der bei einer ersten Ausgestaltung der Erfindung ablaufenden wesentlichen Verfahrensschritte; und
- Fig. 3:: ein Ablaufdiagramm zur Veranschaulichung der bei einer zweiten Ausgestaltung der Erfindung ablaufenden wesentlichen Verfahrensschritte.

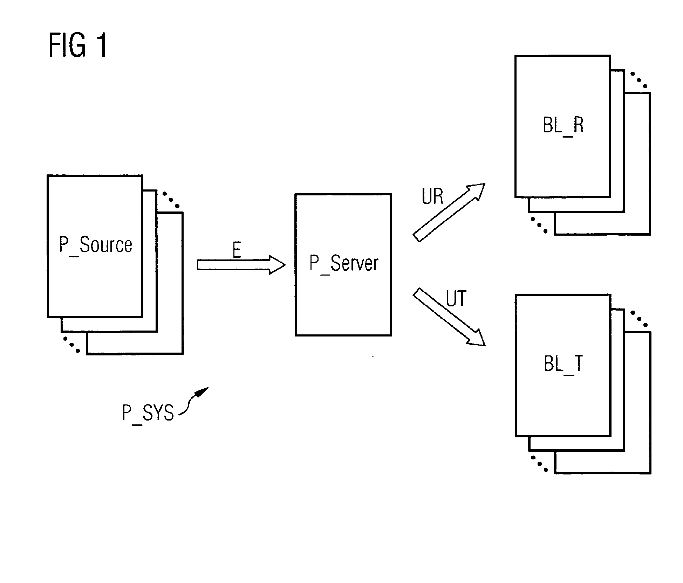

Fig. 1 zeigt ein Presence System P_SYS mit mehreren zu überwachenden Teilnehmern bzw. den Teilnehmern zugeordneten Einrichtungen P_Source und mehreren Buddy-Listen BL_R, BL_T. Hierbei wird eine Zuständsänderung bei einem zu überwachenden Teilnehmer bzw. bei einer zu überwachenden Einrichtung P_Source über eine entsprechende Aktualisierungsmeldung E - in der Literatur häufig als Presence Source Event bezeichnet - an einen zentralen Presence Server P_Server übermittelt. Der Presence Server P_Server ermittelt diejenigen Buddy-Listen BL_R, BL_T, bei denen ein Eintrag für den relevanten Teilnehmer bzw. die relevante Einrichtung existiert und übermittelt eine entsprechende Änderungsmeldung UR, UT an die ermittelten Buddy-Listen BL_R, BL_T.

Die Buddy-Listen BL_R, BL_T werden jeweils auf - nicht dargestellten - Anzeigeeinrichtungen des Presence Systems P_SYS angezeigt. Bei den Anzeigeeinrichtungen kann es sich beispielsweise um das Display eines Telefons oder um eine auf einem PC ablaufende Applikation handeln. Hierbei wird zwischen so genannten "Rich Client Buddy-Listen" BL_R und "Thin Client Buddy-Listen" BL_T unterschieden, wobei ein "Rich Client" ein Endgerät mit eigener Verarbeitungskapazität und ein "Thin Client" ein Endgerät ohne eigene Verarbeitungskapazität ist. Beispielsweise ist ein "Rich Client" durch ein Personal Computer oder ein Telefonendgerät - insbesondere ein IP-Phone (IP: Internet Protocol) - und ein "Thin Client" durch ein PDA (Personal Digital Assistent) oder ein auf dem Personal Computer laufenden Web Browser realisiert.

Bei den "Thin Clients" wird zwischen dem Presence Server P_Server und den "Thin Clients" eine weitere die Steuerung der "Thin Clients" bzgl. des Presence Service realisierende - nicht dargestellte - Einheit benötigt. Somit werden - Zustandsänderungen von zu überwachenden Teilnehmern bzw. Einrichtungen anzeigende - Änderungsmeldungen UR, UT vom Presence Server P_Server entweder - bei den "Rich Clients" - direkt an die entsprechenden Endgeräte bzw. - bei den "Thin Clients" - an die weitere Einheit übermittelt.

Bei dem erfindungsgemäßen Presence System P_SYS besteht die Möglichkeit die Buddy-Liste BL_R, BL_T in einen aktivierten Status und in einen deaktivierten Status zu versetzen, wobei bei dem aktivierten Status die Buddy-Liste BL_R, BL_T selbst angezeigt wird und in dem deaktivierten Status die Buddy-Liste BL_R, BL_T selbst nicht sichtbar ist.

Ein deaktivierter Status vorliegt dabei beispielsweise vor, wenn
a) die Buddy-Liste BL_R, BL_T auf der Anzeigeeinrichtung - durch eine andere Anwendung - verdeckt ist, oder
b) die Buddy-Liste BL_R, BL_T sich außerhalb des sichtbaren Bereichs der Anzeigeeinrichtung befindet, oder
c) die Buddy-Liste BL_R, BL_T lediglich durch ein die Buddy-Liste BL_R, BL_T repräsentierendes Symbol dargestellt ist, oder
d) ein Teil der Buddy-Liste BL_R, BL_T durch ein diesen Teil repräsentierendes Symbol dargestellt ist.

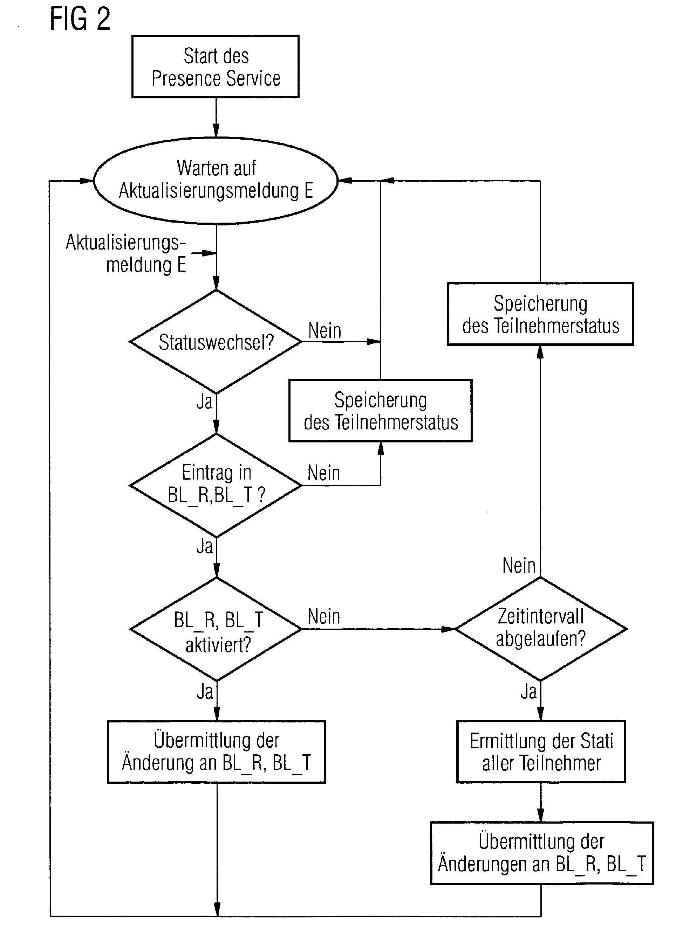

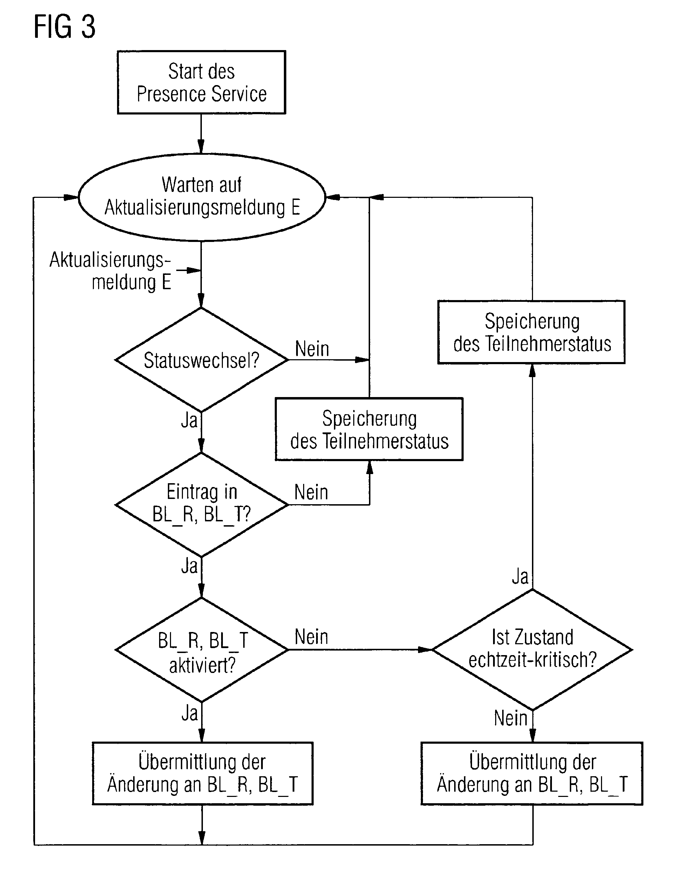

Das erfindungsgemäße Verfahren wird im Folgenden anhand der Figuren 2 und 3 näher erläutert, wobei aus Klarheitsgründen weiterhin auf die Figur 1 Bezug genommen wird.

Fig. 2 zeigt ein Ablaufdiagramm zur Veranschaulichung der bei einer ersten Ausgestaltung der Erfindung ablaufenden wesentlichen Verfahrensschritte. Hierbei wird nach dem Start des Presence Services im Presence Server P_Server auf das Eintreffen einer Aktualisierungsmeldung E gewartet. Beim Eintreffen einer Aktualisierungsmeldung E wird überprüft, ob die Aktualisierungsmeldung E einen Statuswechsel eines Teilnehmers bzw. einer dem Teilnehmer zugeordneten Einrichtung signalisiert. Ist dies nicht der Fall, wird auf das Eintreffen einer weiteren Aktualisierungsmeldung E gewartet.

Wird dagegen durch die Aktualisierungsmeldung E ein Statuswechsel des Teilnehmers bzw. der Einrichtung signalisiert wird in einem nächsten Schritt überprüft, ob für den Teilnehmer bzw. die Einrichtung in einer der Buddy-Listen BL_R, BL_T ein Eintrag vorhanden ist. Ist dies nicht der Fall, wird der geänderte Teilnehmerstatus im Presence Server P_Server gespeichert und es wird auf das Eintreffen einer weiteren Aktualisierungsmeldung E gewartet.

Ist in einer der Buddy-Listen BL_R, BL_T ein entsprechender Eintrag vorhanden, wird überprüft, ob sich die mindestens eine entsprechende Buddy-Liste BL_R, BL_T in einem aktivierten oder einem deaktivierten Status befindet. Befindet sich die mindestens eine entsprechende Buddy-Liste BL_R, BL_T im aktivierten Status, wird die Zustandsänderung durch den Presence Server P_Server unmittelbar an das entsprechende Endgerät übermittelt, so dass die Zustandsänderung durch eine aktualisierte Buddy-Liste BL_R, BL_T an der Anzeigeeinrichtung des Endgeräts angezeigt werden kann. Anschließend wird wiederum auf das Eintreffen einer weiteren Aktualisierungsmeldung E gewartet.

Befindet sich die mindestens eine entsprechende Buddy-Liste BL_R, BL_T dagegen im deaktivierten Status, wird die Zustandsänderung nicht mehr unmittelbar, sondern nur noch in vorgebbaren Zeitintervallen an das entsprechende Endgerät übermittelt. Ist das Zeitintervall noch nicht abgelaufen, wird der geänderte Teilnehmerstatus wiederum im Presence Server P_Server gespeichert und es wird auf das Eintreffen einer weiteren Aktualisierungsmeldung E gewartet.

Ist das Zeitintervall dagegen abgelaufen wird der letzte gültige Zustand des mindestens einen zu überwachenden Teilnehmers bzw. der mindestens einen zu überwachenden Einrichtung P_Source an die Buddy-Liste BL_R, BL_T übermittelt. Enthält die Buddy-Liste BL_R, BL_T mehrere zu überwachende Teilnehmer bzw. Einrichtungen werden durch den Presence Server P_Server die Stati aller zu überwachenden Teilnehmer bzw. Einrichtungen ermittelt und nachfolgend die Zustandsänderungen in einer Sammelmeldung gesammelt an die Buddy-Liste BL_R, BL_T übermittelt. Anschließend wird wiederum auf das Eintreffen einer weiteren Aktualisierungsmeldung E gewartet.

Beispielsweise erfolgt die Aktualisierung einer Buddy-Liste BL_R, BL_T in Zeitintervallen von jeweils 30 Sekunden.

Gemäß einem ersten Verfahren kann der Zeitabstand von 30 Sekunden für die Aktualisierung der Buddy-Liste BL_R, BL_T für die gesamte Zeitdauer in der sich die Buddy-Liste BL_R, BL_T im deaktivierten Status befindet konstant beibehalten werden. Dies hat den Vorteil, dass keine weiteren Konfigurationen für das Verfahren benötigt werden.

Gemäß einem zweiten Verfahren kann der Zeitabstand variabel ausgestaltet werden. Hierbei ist es besonders vorteilhaft den Zeitabstand für die Aktualisierung der Buddy-Liste BL_R, BL_T mit zunehmender Zeitdauer in der sich die Buddy-Liste BL_R, BL_T im deaktivierten Status befindet zu erhöhen, da erfahrungsgemäß mit zunehmender Zeitdauer die Wahrscheinlichkeit für eine erneute Aktualisierung der Buddy-Liste BL_R, BL_T immer geringer wird.

Während der Zeitdauer, in der sich die Buddy-Liste BL_R, BL_T im deaktivierten Status befindet, wird ständig überprüft, ob die Buddy-Liste BL_R, BL_T aktiviert wurde. Dies kann beispielsweise durch eine entsprechende Meldung vom Endgerät an den Presence Server P_Server erfolgen. Alternativ kann der Status der Buddy-Liste BL_R, BL_T periodisch vom Presence Server P_Server abgefragt werden. Dieses Verfahren wird in der Literatur als "Polling" bezeichnet, wobei zur Reduzierung der Netzlast die Zeitabstände zwischen zwei Polling-Abfragen so einzustellen sind, dass sie größer als das Zeitintervall sind.

Wurde die Buddy-Liste BL_R, BL_T aktiviert, werden Zustandsänderung eines zu überwachenden Teilnehmers bzw. einer zu überwachenden Einrichtung P_Source durch den Presence Server P_Server wieder unmittelbar an das entsprechende Endgerät übermittelt.

Fig. 3 zeigt ein Ablaufdiagramm zur Veranschaulichung der bei einer zweiten Ausgestaltung der Erfindung ablaufenden wesentlichen Verfahrensschritte.

Die zweite Ausgestaltung unterscheidet sich von der ersten Ausgestaltung dadurch, dass im deaktivierten Status anstelle einer Aktualisierung der Buddy-Liste BL_R, BL_T in vorgebbaren Zeitabständen nur noch eine Aktualisierung der Buddy-Liste BL_R, BL_T erfolgt, wenn eine Änderung eines nicht-echtzeitkritischen Zustands eines zu überwachenden Teilnehmers bzw. einer zu überwachenden Einrichtung P_Source vorliegt.

Beispiele für nicht-echtzeitkritische Zustände sind unter anderem: "Teilnehmer ist im Büro", "Teilnehmer ist in einer Besprechung" oder "Teilnehmer ist im Urlaub". Beispiele für echtzeitkritische Zustände sind unter anderem: "Teilnehmer ist besetzt" oder "Teilnehmer ist frei".

Diese Ausgestaltung des erfindungsgemäßen Verfahrens basiert auf der Überlegung, dass sich echtzeitkrititsche Zustände während einer Deaktivierung der Buddy-Liste BL_R, BL_T in der Regel mehrfach ändern. Somit ist eine permanente Aktualisierung dieser echtzeitkrititschen Zustände in der Buddy-Liste BL_R, BL_T nicht erforderlich, da sie von dem Nutzer der Buddy-Liste BL_R, BL_T nicht benötigt bzw. abgefragt werden. Es ist folglich ausreichend, die echtzeitkritischen Zustände in der Buddy-Liste BL_R, BL_T erst bei einer erneuten Aktivierung der Buddy-Liste BL_R, BL_T entsprechend zu aktualisieren.

Gemäß einer dritten - nicht dargestellten - Ausgestaltung der Erfindung wird die erste mit der zweiten Ausgestaltung kombiniert. Folglich werden bei einem deaktivierten Status nur nicht-echtzeitkritische Zustände der Buddy-Liste BL_R, BL_T in vorgebbaren Zeitabständen aktualisiert.

Vorteilhafterweise besteht die Möglichkeit die Einstellungen für die Aktualisierung einer Buddy-Liste BL_R, BL_T durch einen Benutzer individuell konfigurieren zu können. So ist beispielsweise der Zeitabstand nach der eine Aktualisierung der Buddy-Liste BL_R, BL_T erfolgt benutzer-individuell einstellbar. Möglich ist auch, dass der Zeitabstand derart konfigurierbar ist, dass er abhängig von der Tageszeit oder der Anwesenheit des Benutzers verändert wird. Alternativ können die Zeitabstände steuereinrichtungs-individuell eingestellt werden, so dass alle von der Steuereinrichtung gesteuerten Buddy-Listen gleichzeitig aktualisiert werden.

Die Erfindung basiert somit auf der Überlegung, dass nur Informationen über aktuell von der Buddy-Liste BL_R, BL_T benötigte Zustandsänderungen vom System an die Buddy-Liste BL_R, BL_T übermittelt werden. Informationen über nicht benötigte Zustandsänderungen werden im Presence System "unterdrückt".

Eine entsprechende Unterdrückung der Änderungsmeldungen UR, UT für die Aktualisierung der Buddy-Liste BL_R, BL_T erfolgt dabei im Presence Server P_Server. Auf diese Weise kann der Meldungsverkehr zwischen dem Presence Server P_Server und den Endgeräten stark reduziert werden.

## Patentansprüche

1. Verfahren zur Realisierung eines Presence Services, mit auf einer Anzeigeeinrichtung eines Endgerätes anzeigbaren Teilnehmerinformationen (BL_R, BL_T),
bei dem die Teilnehmerinformationen (BL_R, BL_T) bei einer Zustandsänderung mindestens eines zu überwachenden Teilnehmers und/oder mindestens einer dem Teilnehmer zugeordneten Einrichtung (P_Source) durch eine Steuereinrichtung (P_Server) aktualisiert werden, und
im deaktivierten Status die Aktualisierung der Teilnehmerinformationen (BL_R, BL_T) durch die Steuereinrichtung (P_Server) anhand eines anderen Verfahrens erfolgt, als im aktivierten Status
**dadurch gekennzeichnet**
**dass**
bei dem in einem aktivierten Status die Teilnehmerinformationen (BL_R, BL_T) selbst angezeigt werden und in einem deaktivierten Status die Teilnehmerinformationen (BL_R, BL_T) selbst nicht sichtbar sind.

2. Verfahren nach Anspruch 1,
**dadurch gekennzeichnet**
**dass** die Teilnehmerinformationen (BL_R, BL_T) Informationen über einen Teilnehmer selbst und/oder über dem Teilnehmer zugeordnete Einrichtungen umfassen.

3. Verfahren nach Anspruch 1 oder 2,
**dadurch gekennzeichnet**
**dass** ein deaktivierter Status vorliegt wenn,
a) die Teilnehmerinformationen (BL_R, BL_T) auf der Anzeigeeinrichtung verdeckt sind, oder
b) die Teilnehmerinformationen (BL_R, BL_T) sich außerhalb des sichtbaren Bereichs der Anzeigeeinrichtung befinden, oder
c) die Teilnehmerinformationen (BL_R, BL_T) durch ein die Teilnehmerinformationen (BL_R, BL_T) repräsentierendes Symbol dargestellt sind, oder
d) ein Teil der Teilnehmerinformationen (BL_R, BL_T) durch ein diesen Teil repräsentierendes Symbol dargestellt sind.

4. Verfahren nach einem der vorhergehenden Ansprüche,
**dadurch gekennzeichnet**
**dass** im aktivierten Status eine Aktualisierung der Teilnehmerinformationen (BL_R, BL_T) unmittelbar nach einer Zustandsänderung des mindestens einen zu überwachenden Teilnehmers und/oder der Einrichtung (P_Source) erfolgt.

5. Verfahren nach einem der vorhergehenden Ansprüche,
**dadurch gekennzeichnet**
**dass** im deaktivierten Status eine Aktualisierung der Teilnehmerinformationen (BL_R, BL_T) nicht unmittelbar nach einer Zustandsänderung des mindestens einen zu überwachenden Teilnehmers und/oder der Einrichtung (P_Source) erfolgt, sondern jeweils nach vorgegebenen Zeitintervallen.

6. Verfahren nach Anspruch 5,
**dadurch gekennzeichnet**
**dass** für die Aktualisierung nur der letzte gültige Zustand des mindestens einen zu überwachenden Teilnehmers und/oder der Einrichtung (P_Source) übermittelt wird.

7. Verfahren nach Anspruch 5 oder 6,
**dadurch gekennzeichnet**
**dass** bei Zustandsänderungen von mehreren zu überwachenden Teilnehmern und/oder Einrichtungen (P_Source), die Zustandsänderungen gesammelt in einer Sammelmeldung an das Endgerät übermittelt werden.

8. Verfahren nach einem der Ansprüche 5 bis 7,
**dadurch gekennzeichnet**
**dass** mit einer zunehmenden Zeitdauer, während der sich die Teilnehmerinformationen (BL_R, BL_T) im deaktivierten Status befinden, die Zeitintervalle verlängert werden.

9. Verfahren nach einem der Ansprüche 5 bis 8,
**dadurch gekennzeichnet**
**dass** die Zeitintervalle Benutzer-individuell oder Steuereinrichtungs-individuell einstellbar sind.

10. Verfahren nach einem der vorhergehenden Ansprüche,
**dadurch gekennzeichnet**
**dass** mittels der Teilnehmerinformationen (BL_R, BL_T) echtzeitkritische und nicht-echtzeitkritische Zustände des mindestens einen zu überwachenden Teilnehmers und/oder der Einrichtung (P_Source) angezeigt werden.

11. Verfahren nach Anspruch 10,
**dadurch gekennzeichnet**
**dass** die Teilnehmerinformationen (BL_R, BL_T) im deaktivierten Status nur bei Änderungen von nicht-echtzeitkritischen Zuständen des mindestens einen zu überwachenden Teilnehmers und/oder der Einrichtung (P_Source) aktualisiert werden.

12. Verfahren nach einem der vorhergehenden Ansprüche,
**dadurch gekennzeichnet**
**dass** im deaktivierten Status eine Übermittlung von entsprechenden Änderungsmeldungen von der Steuereinrichtung (P_Server) an das Endgerät unterdrückt wird.

13. Verfahren nach einem der vorhergehenden Ansprüche,
**dadurch gekennzeichnet**
**dass** nach einem Wechsel vom deaktivierten in den aktivierten Status eine Aktualisierung der Teilnehmerinformationen (BL_R, BL_T) wiederum unmittelbar erfolgt.

14. Verfahren nach einem der vorhergehenden Ansprüche,
**dadurch gekennzeichnet**
**dass** eine Übermittlung einer Information, dass sich die Teilnehmerinformationen (BL_R, BL_T) im deaktivierten Status befindet, implizit **dadurch** erfolgt, dass durch das Endgerät die Verbindung zwischen der Steuereinrichtung (P_Server) und dem Endgerät unterbrochen wird.

15. Verfahren nach einem der Ansprüche 1 bis 13,
**dadurch gekennzeichnet**
**dass** eine Übermittlung einer Information, dass sich die Teilnehmerinformationen (BL_R, BL_T) im aktivierten oder deaktivierten Status befinden durch eine explizite Signalisierung erfolgt.

16. Verfahren nach Anspruch 15,
**dadurch gekennzeichnet**
**dass** in Fällen, in denen ein deaktivierter Status signalisiert wird, zusätzlich eine Information darüber übermittelt wird, ob eine Aktualisierung die Teilnehmerinformationen (BL_R, BL_T) weiter erfolgen soll, oder nicht.

17. Presence System (P_SYS) zur Durchführung eines der Verfahren nach einem der vorhergehenden Ansprüche 1 - 9.

18. Presence System (P_SYS) nach Anspruch 17,
**dadurch gekennzeichnet**
**dass** das Endgerät ein Personal Computer, ein schnurgebundenes Telefon, ein Mobiltelefon oder ein PDA (Personal Digital Assistent) ist.

## Claims

1. Method for achieving a presence service, with user information (BL_R, BL_T) that can be displayed on a display device of a terminal,
in which with a change in state of at least one of the users to be monitored and/or at least one device (P_Source) associated with the user the user information (BL_R, BL_T) is updated by a controller (P_Server), and
in the deactivated state the user information (BL_R, BL_T) is updated by the controller (P_Server) using a different method to that in the activated state,
**characterised in that**
in an activated state the user information (BL_R, BL_T) itself is displayed and in a deactivated state the user information (BL_R, BL_T) itself is not visible.

2. Method according to claim 1, **characterised in that** the user information (BL_R, BL_T) includes information about a user himself and/or devices associated with the user.

3. Method according to claim 1 or 2, **characterised in that** a deactivated state exists if
a) the user information (BL_R, BL_T) is hidden on the display device, or
b) the user information (BL_R, BL_T) is situated outside of the visible region of the display device, or
c) the user information (BL_R, BL_T) is shown by a symbol representing the user information (BL_R, BL_T), or
d) a portion of the user information (BL_R, BL_T) is shown by a symbol representing this portion.

4. Method according to any one of the preceding claims, **characterised in that** in the activated state the user information (BL_R, BL_T) is updated immediately after a change in state of the at least one user to be monitored and/or device (P_Source).

5. Method according to any one of the preceding claims, **characterised in that** in the deactivated state the user information (BL_R, BL_T) is not updated immediately after a change in state of the at least one user to be monitored and/or device (P_Source), but after predetermined time intervals in each case.

6. Method according to claim 5, **characterised in that** for the updating process only the last valid state of the at least one user to be monitored and/or device (P_Source) is transmitted.

7. Method according to claim 5 or 6, **characterised in that** in the case of changes in state of a plurality of users to be monitored and/or devices (P_Source), the changes in state are transmitted to the terminal collected in a group message.

8. Method according to any one of claims 5 to 7, **characterised in that** with an increasing period of time, during which the user information (BL_R, BL_T) is in the deactivated state, the time intervals are extended.

9. Method according to any one of claims 5 to 8, **characterised in that** the time intervals can be set user-individually or controller-individually.

10. Method according to any one of the preceding claims, **characterised in that** realtime-critical and non-realtime-critical states of the at least one user to be monitored and/or device (P_Source) are displayed by means of the user information (BL_R, BL_T).

11. Method according to claim 10, **characterised in that** in the deactivated state the user information (BL_R, BL_T) is only updated in the case of changes in non-realtime-critical states of the at least one user to be monitored and/or device (P_Source).

12. Method according to any one of the preceding claims, **characterised in that** in the deactivated state transmission of corresponding change messages from the controller (P_Server) to the terminal is suppressed.

13. Method according to any one of the preceding claims, **characterised in that** following a change from the deactivated state to the activated state, the user information (BL_R, BL_T) is again updated immediately.

14. Method according to any one of the preceding claims, **characterised in that** transmission of information regarding the fact that the user information (BL_R, BL_T) is in the deactivated state takes places implicitly **in that** the connection between the controller (P_Server) and the terminal is broken by the terminal.

15. Method according to any one of claims 1 to 13, **characterised in that** transmission of information regarding the fact that the user information (BL_R, BL_T) is in the activated or deactivated state takes places by way of explicit signalling.

16. Method according to claim 15, **characterised in that** in cases where a deactivated signal is signalled, information about whether updating the user information (BL_R, BL_T) should continue to take place or not is also transmitted.

17. Presence system (P_SYS) for carrying out one of the methods according to any one of the preceding claims 1 to 9.

18. Presence system (P_SYS) according to claim 17, **characterised in that** the terminal is a personal computer, a corded telephone, a mobile phone or a PDA (Personal Digital Assistant).

## Revendications

1. Procédé pour la réalisation d'un service de présence, comprenant des informations d'abonnés (BL_R, BL_T) pouvant être affichées avec un dispositif d'affichage d'un terminal,
dans lequel les informations d'abonnés (BL_R, BL_T) sont mises à jour lors d'une modification d'état d'au moins un abonné à surveiller et/ou d'au moins un dispositif (P_Source) attribué à l'abonné par un dispositif de commande (P_Server), et
dans l'état désactivé, la mise à jour des informations d'abonnés (BL_R, BL_T) s'effectue par le dispositif de commande (P_Server) à l'aide d'un autre procédé que dans l'état activé,
**caractérisé en ce que**,
les informations d'abonnés (BL_R, BL_T) mêmes sont affichées dans un état activé et les informations d'abonnés (BL_R, BL_T) mêmes ne sont pas visibles dans un état désactivé.

2. Procédé selon la revendication 1,
**caractérisé en ce que**,
les informations d'abonnés (BL_R, BL_T) comprennent des informations relatives à un abonné même et/ou à des dispositifs attribués à l'abonné.

3. Procédé selon la revendication 1 ou 2,
**caractérisé en ce que**,
on a un état désactivé dans les cas où,
a) les informations d'abonnés (BL_R, BL_T) sont masquées sur le dispositif d'affichage, ou
b) les informations d'abonnés (BL_R, BL_T) se trouvent à l'extérieur de la zone visible du dispositif d'affichage, ou
c) les informations d'abonnés (BL_R, BL_T) sont représentées par un symbole représentant les informations d'abonnés (BL_R, BL_T), ou
d) une partie des informations d'abonnés (BL_R, BL_T) est représentée par un symbole représentant cette partie.

4. Procédé selon l'une quelconque des revendications précédentes,
**caractérisé en ce que**,
dans l'état désactivé, une mise à jour des informations d'abonnés (BL_R, BL_T) intervient immédiatement après une modification d'état de l'au moins un abonné à surveiller et/ou du dispositif (P_Source).

5. Procédé selon l'une quelconque des revendications précédentes,
**caractérisé en ce que**,
dans l'état désactivé, une mise à jour des informations d'abonné (BL_R, BL_T) n'intervient pas immédiatement après une modification d'état de l'au moins un abonné à surveiller et/ou du dispositif (P_Source), mais respectivement après des intervalles de temps prédéfinis.

6. Procédé selon la revendication 5,
**caractérisé en ce que**,
pour la mise à jour, seul le dernier état valable de l'au moins un abonné à surveiller et/ou du dispositif (P_Source) est transmis.

7. Procédé selon la revendication 5 ou 6,
**caractérisé en ce que**,
en cas de modification d'état de plusieurs abonnées et/ou dispositifs (P_Source) à surveiller, les modifications d'état sont collectées et transmises dans un message collectif au terminal.

8. Procédé selon l'une quelconque des revendications 5 à 7,
**caractérisé en ce que**,
avec une durée croissante, pendant laquelle les informations d'abonnés (BL_R, BL_T) se trouvent dans l'état désactivé, les intervalles de temps sont allongés.

9. Procédé selon l'une quelconque des revendications 5 à 8,
**caractérisé en ce que**
les intervalles de temps sont réglables de façon individuelle par l'utilisateur ou de façon individuelle par le dispositif de commande.

10. Procédé selon l'une quelconque des revendications précédentes,
**caractérisé en ce que**
des états critiques en temps réel et non critiques en temps réel de l'au moins un abonné à surveiller et/ou du dispositif (P_Source) sont affichés au moyen des informations d'abonné (BL_R, BL_T).

11. Procédé selon la revendication 10,
**caractérisé en ce que**
les informations d'abonnés (BL_R, BL_T) sont actualisées dans l'état désactivé uniquement en cas de modifications d'états non critiques en temps réel de l'au moins un abonné à surveiller et/ou du dispositif (P_Source).

12. Procédé selon l'une quelconque des revendications précédentes,
**caractérisé en ce que**
dans l'état désactivé, une transmission de messages de modification correspondants du dispositif de commande (P_Server) au terminal est supprimée.

13. Procédé selon l'une quelconque des revendications précédentes,
**caractérisé en ce que**,
après un changement de l'état désactivé dans l'état activé, une mise à jour des informations d'abonné (BL_R, BL_T) intervient à nouveau immédiatement.

14. Procédé selon l'une quelconque des revendications précédentes,
**caractérisé en ce que**
une transmission d'une information stipulant que les informations d'abonnés (BL_R, BL_T) se trouvent dans l'état désactivé, s'effectue de façon implicite par le fait que la liaison entre le dispositif de commande (P_Server) et le terminal est interrompue par le terminal.

15. Procédé selon l'une quelconque des revendications 1 à 13,
**caractérisé en ce que**
une transmission d'une information stipulant que les informations d'abonnés (BL_R, BL_T) se trouvent dans l'état activé ou désactivé s'effectue par une signalisation explicite.

16. Procédé selon la revendication 15,
**caractérisé en ce que**,
dans les cas où un état désactivé est signalé, on transmet en supplément une information pour savoir si une mise à jour des informations d'abonnés (BL_R, BL_T) doit s'effectuer encore ou non.

17. Système de présence (P_SYS) pour la mise en oeuvre de l'un des procédés selon l'une quelconque des revendications 1 à 9 précédentes.

18. Système de présence (P_SYS) selon la revendication 17,
**caractérisé en ce que**
le terminal est un ordinateur individuel, un téléphone à fil, un téléphone mobile ou un PDA (Personal Digital Assistent).
